# EUROPEAN PATENT APPLICATION

(11) **EP 3 059 945 A1**
(43) Date of publication of application: **24.08.2016**
(21) Application number: 14798081.7
(22) Date of filing: 22.04.2014
(51) Int. Cl.: H04N 7/18

(54) **METHOD AND SYSTEM FOR VIDEO SURVEILLANCE CONTENT ADAPTATION, AND CENTRAL SERVER AND DEVICE**

(30) Priority: 26.11.2013 CN 201310611426
(71) Applicant: ZTE Corporation, Shenzhen, Guangdong 518057 (CN)
(72) Inventor: WANG, Yingxuan, Shenzhen Guangdong 518057 (CN); YE, Xiaoyang, Shenzhen Guangdong 518057 (CN); DENG, Shuo, Shenzhen Guangdong 518057 (CN); GAO, Yan, Shenzhen Guangdong 518057 (CN)
(74) Representative: Schröer, Gernot H.
(86) International application number: PCT/CN2014/075879
(87) International publication number: WO 2014/183540

(57) **Abstract**

A method and system for video surveillance content adaptation, a central server and a device are disclosed in the embodiments of the present invention, which relates to the field of multimedia communications. The method disclosed in the embodiment of the present invention includes: a surveillance premises unit receiving capacity parameter information of a surveillance client unit through a central server, and the surveillance premises unit adjusting parameters of a surveillance video according to the capacity parameter information, and outputting the surveillance video whose parameters are adjusted to the surveillance client unit. A surveillance premises unit for video surveillance, a central server and a system for video surveillance content adaptation are also disclosed in the embodiments of the present invention. The optimal effect is achieved when the output video is played on the client unit in the present application.

## Description

### Technical Field

The present invention relates to the field of multimedia communications, and particularly, to a method and system for video surveillance content adaptation, a central server and a device.

### Background of the Related Art

At present, the application of video surveillance is very extensive, and the video surveillance as an effective security means is used in almost all industries, meanwhile, the vast majority of applications and services are mainly aiming at enterprises or governments at present, and the services are provided through a video surveillance service platform provided by the operators, and all signalings and data are transmitted and distributed through the platform. In recent years, point-to-point video surveillance services with respect to individual or family start to boom. Different from the video surveillance services of the government and enterprise type, the user can directly acquire images collected by the cameras through the client unit without using any video surveillance platforms. This kind of cameras can be IP cameras, 3G/4G cameras or mobile terminals with a camera.

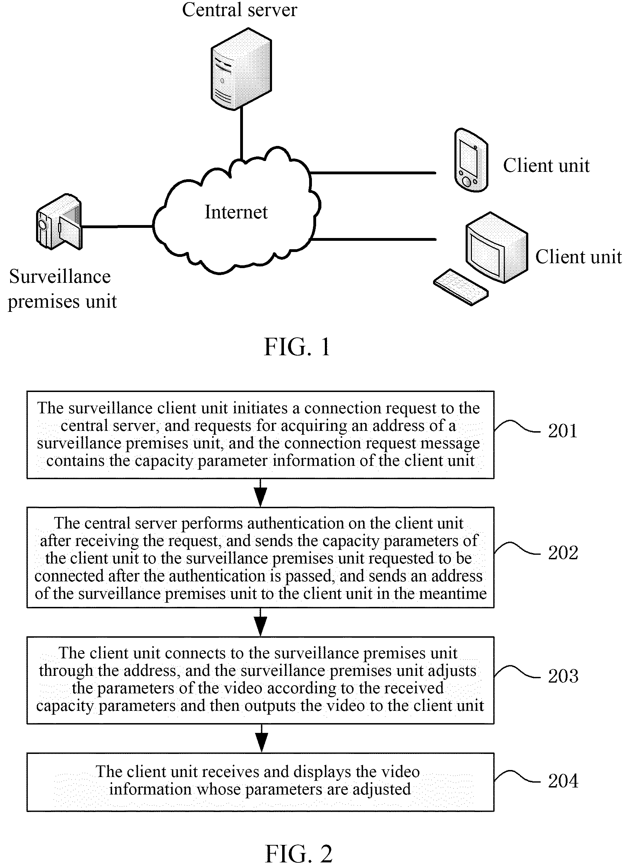

FIG. 1 is a schematic diagram of one point-to-point video surveillance framework, a central server in the figure is mainly used for session management, authentication, and maintaining related information of the surveillance premises unit and so on, and it includes functions such as a session initiation SIP server, a Web server and a database and so on. The central server accesses a public network, and possesses a fixed domain name and IP address, the user client unit can access the central server via the Internet, and it can acquire the information of the surveillance premises unit which it wants to assess after the authentication is successful and establish a session connection with the central server, and then acquire the video surveillance data.

Now, the terminal devices tend to become varied, the client units of video surveillance are not limited to the PC any more, especially with respect to the mobile video surveillance and personal users, some mobile handheld devices such as smartphones and tablet computers and so on can be used as surveillance client units. The user may access the surveillance video through a PC client unit at a time, and checks the surveillance video through a mobile client unit at another time, since capabilities of different terminals would be different due to the difference of soft hardware configurations thereof, parameters such as the maximum resolution ratios, audio and video forms and code rates supported by the terminals would be different, thus the processing and play effect of the surveillance images may be affected.

For the government and enterprise type services providing services through the video surveillance platform, parameters including a format of the video data, a resolution ratio and a code rate can be converted by means of the platform side performing transcoding or double flow and so on, thereby performing content adaptation on different types of terminals. However, for the point-to-point surveillance services without the video surveillance platform, there is no corresponding solution to perform adaptation on different terminals.

### Summary of the Invention

The technical problem required to be solved in the embodiments of the present invention is to provide a method and system for video surveillance content adaptation, a central server and a device, which can adjust parameters including a video format, a resolution ratio and a code rate according to different terminal capabilities when different terminals access the point-to-point video surveillance services, so as to obtain a better viewing effect on the client unit, and extend the range of accessing terminals.

In order to solve the above technical problem, the embodiment of the present invention discloses a method for video surveillance content adaptation, which comprises:
a surveillance premises unit receiving capacity parameter information of a surveillance client unit through a central server, and the surveillance premises unit adjusting parameters of a surveillance video according to the capacity parameter information, and outputting the surveillance video whose parameters are adjusted to the surveillance client unit.

Alternatively, in the above method, the surveillance premises unit adjusting the parameters of a surveillance video according to the capacity parameter information comprises:
the surveillance premises unit performing real-time encoding on the surveillance video according to the capacity parameter information of the surveillance client unit.

Alternatively, in the above method, the capacity parameter information of the surveillance client unit comprises one or more of the following:
a maximum resolution ratio supported by the surveillance client unit, a video format supported by the surveillance client unit, and a code rate supported by the surveillance client unit.

Alternatively, in the above method, the surveillance premises unit receiving capacity parameter information of the surveillance client unit through a central server comprises:
the surveillance client unit initiating a connection request to the central server, and requesting for acquiring an address of the surveillance premises unit, wherein, the connection request contains the capacity parameter information of the surveillance client unit;
after receiving the connection request, the central server performing authentication on the surveillance client unit, and after the authentication is successful, sending the capacity parameter information of the surveillance client unit to the surveillance premises unit requested to be connected.

Alternatively, in the above method, when sending the capacity parameter information of the client unit to the surveillance premises unit requested to be connected, the central server further sends the address of the surveillance premises unit to the surveillance client unit;
after the surveillance client unit connects to the surveillance premises unit through the address, the surveillance premises unit then adjusts parameters of an output video according to the received capacity parameter information.

Alternatively, in the above method, when the surveillance client unit requests for connecting to the surveillance premises unit, if the surveillance premises unit has established a connection with another surveillance client unit, the method further comprises:
the surveillance premises unit comparing a priority of the surveillance client unit that requests for connecting with a priority of the surveillance client unit that has established a connection;
if the priorities are different, performing adaptation of video parameters on a surveillance client unit with a higher priority, and if the priorities are identical, performing adaptation of video parameters according to a sequential order of accessing by the surveillance client units.

Alternatively, in the above method, the priority of the surveillance client unit is sent to the surveillance premises unit through the central server.

The embodiment of the present invention further discloses a surveillance premises unit for video surveillance, which comprises:
an information collection module, configured to collect audio and video data of a monitored scenario;
a content adaptation module, configured to adjust the audio and video data collected by the information collection module according to capacity parameter information of a surveillance client unit; and
a data transmission module, configured to convert the audio and video data adjusted by the content adaptation module into digital media data that can be transmitted based on an IP packet and send the digital media data to the surveillance client unit.

Alternatively, in the above device, the content adaptation module being configured to adjust the audio and video data collected by the information collection module according to capacity parameter information of a surveillance client unit refers to:
the content adaptation module being configured to perform real-time encoding on the audio and video data collected by the information collection module according to the capacity parameter information of the surveillance client unit.

Alternatively, in the above device, the capacity parameter information of the surveillance client unit comprises one or more of the following:
a maximum resolution ratio supported by the surveillance client unit, a video format supported by the surveillance client unit, and a code rate supported by the surveillance client unit.

Alternatively, the above device further comprises:
a comparison module, configured to: when the present surveillance premises unit has established a connection with a surveillance client unit and receives a connection request from another surveillance client unit, compare a priority of the surveillance client unit that requests for connecting with a priority of the surveillance client unit that has established a connection, if the priorities are different, control the content adaptation module to perform adaptation of video parameters on a surveillance client unit with a higher priority, and if the priorities are identical, control the content adaptation module to perform adaptation of video parameters according to a sequential order of accessing by the surveillance client units.

The embodiment of the present invention further discloses a central server, which comprises an SIP service function module and a database, and further comprises a web service function module, receiving a connection request initiated by a surveillance client unit, and sending capacity parameter information of the surveillance client unit to a surveillance premises unit.

The embodiment of the present invention further discloses a system for video surveillance content adaptation, which comprises a client unit, the surveillance premises unit as mentioned above, and the central server as mentioned above.

The present application discloses a method and system for content adaptation and related devices based on the point-to-point video surveillance, a surveillance client unit sends a connection request of a surveillance premises unit to a central server, capacity parameters of the client unit itself are added in the request message, including the supported maximum resolution ratio, video format and code rate, the central server receives the request and performs authentication on the client unit, then sends the capacity parameters of the client unit to the surveillance premises unit to which the client unit requests for connecting, and returns an address of the surveillance premises unit to the client unit. After receiving the capacity parameters of the client unit, the surveillance premises unit adjusts parameters of the output video according to the capacity parameters, so as to achieve the optimal effect when the output video is played on the client unit. The surveillance client unit establishes a connection with the surveillance premises unit through the address returned by the central server, and receives video data to decode and play.

### Brief Description of Drawings

FIG. 1 is a schematic diagram of a point-to-point video surveillance framework in the related art;
FIG. 2 is a flow chart of a method for content adaptation based on the point-to-point video surveillance provided in the embodiment of the present invention;
FIG. 3 is a schematic diagram of a structure of a system for content adaptation based on the point-to-point video surveillance provided in the embodiment of the present invention;
FIG. 4 is a schematic diagram of a structure of a surveillance premises unit provided in the embodiment of the present invention;
FIG. 5 is a schematic diagram of a structure of a central server provided in the embodiment of the present invention.

### Preferred Embodiments of the Invention

The technical scheme of the embodiments of the present invention would be further described in detail in combination with the accompanying drawings below. The embodiments and the characteristics in the embodiments in the present application can be arbitrarily combined with each other in the case of no conflict.

### Embodiment 1

The embodiment provides a method for video surveillance content adaptation, which includes:
a surveillance premises unit receiving capacity parameter information of a client unit through a central server, and the surveillance premises unit adjusting parameters of an output video according to the acquired capacity parameter information, and outputting the surveillance video whose parameters are adjusted to the client unit.

The above content adaptation process based on the point-to-point video surveillance is as shown in FIG. 2, which includes the following steps 201 to 204:
In Step 201, the surveillance client unit initiates a connection request to the central server, and requests for acquiring an address of a surveillance premises unit, and the connection request contains the capacity parameter information of the client unit;
   the capacity parameter information of the client unit at least includes one or more of the following:
   a maximum resolution ratio, a video format and a code rate supported by the surveillance client unit itself.

Wherein, the central servers accesses a public network, and possesses a fixed domain name and IP address, which is convenient for the surveillance client unit to access. In the embodiment, the central server includes: an SIP server, a Web server and a database. The SIP server provides session connection management; the Web server provides a Web access management function, and performs management on user login and accessing video surveillance services via the Web and so on; and the database is used for saving user data, and saving information of the surveillance premises unit registered on the central server.

In Step 202, the central server performs authentication on the client unit after receiving the request, and sends the capacity parameters of the client unit to the surveillance premises unit requested to be connected after the authentication is passed, and sends an address of the surveillance premises unit to the client unit in the meantime.

In Step 203, the client unit connects to the surveillance premises unit through the address, and the surveillance premises unit adjusts the parameters of the video according to the received capacity parameters and then outputs the video to the client unit.

In Step 204, the client unit receives and displays the video information whose parameters are adjusted.

The above flow is a case that one client unit initiates a connection request when the surveillance premises unit has no connection with any client unit. With regard to a case that, when a client unit A initiates a connection to a surveillance premises unit, a client unit B has established a connection with the surveillance premises unit and acquired the video data, then a priority is preset for each registered user, when one surveillance premises unit has performed adaptation on a client unit of one user and provided services, and another client unit also initiates an access request, the surveillance premises unit compares the priorities of the two client units, and performs adaptation of video parameters on a client unit of the user with a higher priority; and if the priorities are identical, performs adaptation according to a sequential order of accessing by the client units. The operations are as follows:
Firstly, it is assumed that a client unit A has established a connection with a surveillance premises unit B, and the video parameters output by the surveillance premises unit B are adapted according to the capability of the client unit A. At this point, another client unit C initiates a request for accessing the surveillance premises unit B to a central server and adds its own capability parameters and priority parameters in the request, when the central server receives the request message, firstly it performs authentication on the user, and after the authentication is passed, the central server sends the capability parameters of the client unit C and the priority information of the user to the surveillance premises unit B, and the central server also returns an address of the surveillance premises unit B to the client unit C.

In the next step, the client unit C accesses the surveillance premises unit B according to the returned address, the surveillance premises unit B receives the capability parameters of the client unit C and the user priority information sent by the central server, compares the priority of the client unit C with the priority of the client unit A, if the user priority of the client unit C is higher than the user priority of the client unit A, the surveillance premises unit B adjusts the output video parameters, and performs adaptation according to the capability parameters of the client unit C; otherwise, if the user priority of the client unit C is lower than or equal to the user priority of the client unit A, the surveillance premises unit B does not change the output video parameters.

### Embodiment 2

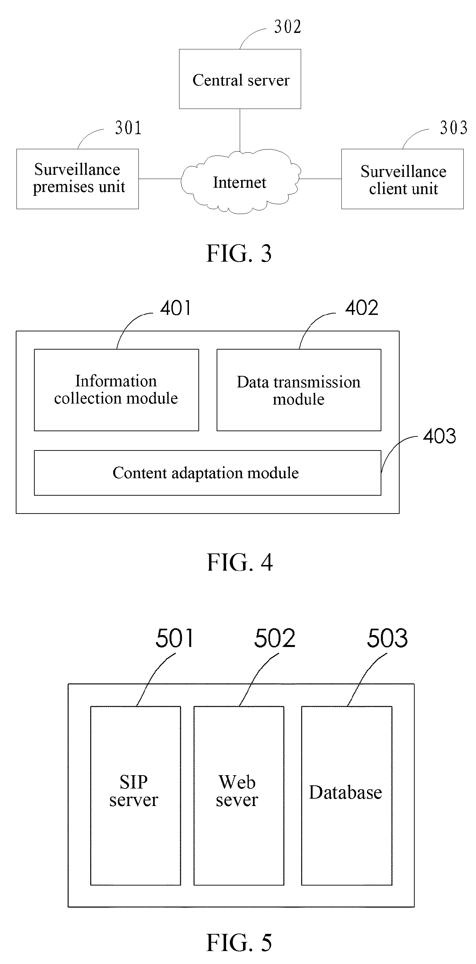

The embodiment provides a system for content adaptation based on the point-to-point video surveillance, and as shown in FIG. 3, the system at least includes: a surveillance premises unit 301, a central server 302 and a client unit 303; wherein,
the surveillance premises unit 301 is configured to: collect video data, adjust video parameters according to capacity parameter information of the client unit, and send the adjusted video data to the client unit;
the central server 302 is configured to transmit the capacity parameter information of the client unit to the surveillance premises unit;
the central server receives a connection request used for requesting for connecting to a surveillance premises unit from a client unit, and performs authentication on the client unit initiating the connection request and the user information, after the authentication is successful, returns information of the surveillance premises unit to the client unit, and sends the capacity parameters of the client unit to the surveillance premises unit.

The client unit 303 is configured to: accept an operation instruction of the user, initiate an access request to the surveillance premises unit, and receive video data of the surveillance premises unit, and decodes the data to play to the user.

Preferably, when a client unit requests for connecting to the surveillance premises unit, if the surveillance premises unit has established a connection with another client unit, the surveillance premises unit would compare a priority of the client unit requesting for connecting with a priority of a client unit that has established the connection, if the priorities are different, perform adaptation of video parameters on a client unit with a higher priority, and if the priorities are identical, perform adaptation of video parameters according to a sequential order of accessing by the client units. Wherein, the priority of the client unit is sent to the surveillance premises unit by the central server.

### Embodiment 3

The embodiment provides a surveillance premises unit based on the point-to-point video surveillance, FIG. 4 is a schematic diagram of a structure of the surveillance premises unit, and as shown in the figure, the surveillance premises unit mainly includes an information collection module 401, a data transmission module 402 and a content adaptation module 403; wherein,
the information collection module 401 is configured to mainly collect audio and video information, and convert the audio and video information into digital media that can be transmitted based on an IP packet;
the data transmission module 402 is configured to mainly send the video data adjusted by the content adaptation module to a client unit; and
the content adaptation module 403 is configured to mainly adjust parameters of the audio and video media according to capacity parameter information of the client unit.

Preferably, based on the above structure, the surveillance premises unit also includes a comparison module, the module is configured to: when the present surveillance premises unit has established a connection with a client unit and receives a connection request from another client unit, compare a priority of a client unit that requests for connecting with a priority of the client unit that has established a connection, if the priorities are different, control the content adaptation module to perform adaptation of video parameters on a client unit with a higher priority, and if the priorities are identical, control the content adaptation module to perform adaptation of video parameters according to a sequential order of accessing by the client units. Wherein, the priority of the client unit is sent to the surveillance premises unit by the central server.

### Embodiment 4

The embodiment provides a central server based on the point-to-point video surveillance, FIG. 5 is a schematic diagram of a structure of the central server, and as shown in the figure, the central server includes: an SIP server 501, a Web server 502 and a database 503. Wherein,
the SIP server 501 is configured to: mainly receive a connection request initiated by a client unit, and provide a session connection management function;
the Web server 502 is configured to: provide a Web access management function, perform management on user login and accessing video surveillance services through the Web and so on, and send capacity parameter information of the client unit to a surveillance premises unit; and
the database 503 is configured to: save user data (including the capacity parameter information) of the client unit and information of the surveillance premises unit registered on the central server.

The ordinary person skilled in the art can understand that all or part of the steps in the above method can be completed by a program instructing related hardware, and the program can be stored in a computer readable memory medium, such as a read-only memory, magnetic disk or optical disk and so on. Alternatively, all or part of the steps of the above embodiments also can be implemented by using one or multiple integrated circuits. Correspondingly, each module/unit in the above embodiments can be implemented in a form of hardware, and also can be implemented in a form of software function module. The present application is not limited to any combination of hardware and software in a specific form.

The above description is only the preferred examples of the embodiments of the present invention, which is not used to limit the protection scope of the embodiments of the present invention. All the modifications, equivalent substitutions, and improvements, etc. made within the rule and principle of the embodiments of the present invention shall fall into the protection scope of the present invention.

### Industrial Applicability

The present application discloses a method and system for content adaptation and related devices based on the point-to-point video surveillance, a surveillance client unit sends a connection request of a surveillance premises unit to a central server, capacity parameters of the client unit itself are added in the request message, including the supported maximum resolution ratio, video format and code rate, the central server receives the request and performs authentication on the client unit, then sends the capacity parameters of the client unit to the surveillance premises unit to which the client unit requests for connecting, and returns an address of the surveillance premises unit to the client unit. After receiving the capacity parameters of the client unit, the surveillance premises unit adjusts parameters of the output video according to the capacity parameters, so as to achieve the optimal effect when the output video is played on the client unit. The surveillance client unit establishes a connection with the surveillance premises unit through the address returned by the central server, and receives video data to decode and play.

## Claims

1. A method for video surveillance content adaptation, comprising:
a surveillance premises unit receiving capacity parameter information of a surveillance client unit through a central server, and the surveillance premises unit adjusting parameters of a surveillance video according to the capacity parameter information, and outputting the surveillance video whose parameters are adjusted to the surveillance client unit.

2. The method of claim 1, wherein, the surveillance premises unit adjusting parameters of a surveillance video according to the capacity parameter information comprises:
the surveillance premises unit performing real-time encoding on the surveillance video according to the capacity parameter information of the surveillance client unit.

3. The method of claim 1 or 2, wherein, the capacity parameter information of the surveillance client unit comprises one or more of the following:
a maximum resolution ratio supported by the surveillance client unit, a video format supported by the surveillance client unit, and a code rate supported by the surveillance client unit.

4. The method of claim 3, wherein, the surveillance premises unit receiving capacity parameter information of the surveillance client unit through a central server comprises:
the surveillance client unit initiating a connection request to the central server, and requesting for acquiring an address of the surveillance premises unit, wherein, the connection request contains the capacity parameter information of the surveillance client unit;
after receiving the connection request, the central server performing authentication on the surveillance client unit, and after the authentication is successful, sending the capacity parameter information of the surveillance client unit to the surveillance premises unit requested to be connected.

5. The method of claim 4, wherein,
when sending the capacity parameter information of the client unit to the surveillance premises unit requested to be connected, the central server further sends the address of the surveillance premises unit to the surveillance client unit;
after the surveillance client unit connects to the surveillance premises unit through the address, the surveillance premises unit then adjusts parameters of an output video according to the received capacity parameter information.

6. The method of claim 4, wherein, when the surveillance client unit requests for connecting to the surveillance premises unit, if the surveillance premises unit has established a connection with another surveillance client unit, the method further comprises:
the surveillance premises unit comparing a priority of the surveillance client unit that requests for connecting with a priority of the surveillance client unit that has established a connection;
if the priorities are different, performing adaptation of video parameters on a surveillance client unit with a higher priority, and if the priorities are identical, performing adaptation of video parameters according to a sequential order of accessing by the surveillance client units.

7. The method of claim 6, wherein, the priority of the surveillance client unit is sent to the surveillance premises unit through the central server.

8. A surveillance premises unit for video surveillance, comprising:
an information collection module, configured to collect audio and video data of a monitored scenario;
a content adaptation module, configured to adjust the audio and video data collected by the information collection module according to capacity parameter information of a surveillance client unit; and
a data transmission module, configured to convert the audio and video data adjusted by the content adaptation module into digital media data that can be transmitted based on an IP packet and send the digital media data to the surveillance client unit.

9. The device of claim 8, wherein,
the content adaptation module being configured to adjust the audio and video data collected by the information collection module according to capacity parameter information of a surveillance client unit refers to:
the content adaptation module being configured to perform real-time encoding on the audio and video data collected by the information collection module according to the capacity parameter information of the surveillance client unit.

10. The device of claim 8 or 9, wherein, the capacity parameter information of the surveillance client unit comprises one or more of the following:
a maximum resolution ratio supported by the surveillance client unit, a video format supported by the surveillance client unit, and a code rate supported by the surveillance client unit.

11. The device of claim 10, wherein, the surveillance premises unit further comprises:
a comparison module, configured to: when the present surveillance premises unit has established a connection with a surveillance client unit and receives a connection request from another surveillance client unit, compare a priority of the surveillance client unit that requests for connecting with a priority of the surveillance client unit that has established a connection, if the priorities are different, control the content adaptation module to perform adaptation of video parameters on a surveillance client unit with a higher priority, and if the priorities are identical, control the content adaptation module to perform adaptation of video parameters according to a sequential order of accessing by the surveillance client units.

12. A central server, comprising an SIP service function module and a database, **characterized in** further comprising:
a web service function module, configured to: receive a connection request initiated by a surveillance client unit, and send capacity parameter information of the surveillance client unit to a surveillance premises unit.

13. A system for video surveillance content adaptation, comprising a client unit, **characterized in** further comprising the surveillance premises unit of the claims 8 to 11, and the central server of the claim 12.
